# FASCICULE DE BREVET EUROPEEN

(11) **EP 4 582 240 B1**
(45) Date de publication et mention de la délivrance du brevet: **28.10.2026**
(21) Numéro de dépôt: 24220950.0
(22) Date de dépôt: 18.12.2024
(51) Int. Cl.: B29C 49/00, B29C 49/42, B29C 49/06, B29C 49/02, B29L 31/46, B29L 31/00

(54) **PREFORME A INTERFACE DE FIXATION DE POIGNEE, BOUTEILLE FABRIQUEE PAR SOUFFLAGE D'UNE TELLE PREFORME, ET ENSEMBLE BOUTEILLE-POIGNEE ASSOCIE**
VORFORMLING MIT GRIFFBEFESTIGUNGSSCHNITTSTELLE, DURCH BLASFORMEN EINES SOLCHEN VORFORMLINGS HERGESTELLTE FLASCHE UND ZUGEHÖRIGE FLASCHENANORDNUNG
PREFORM WITH GRIP ATTACHMENT INTERFACE, BOTTLE PRODUCED BY BLOW MOLDING SUCH PREFORM, AND ASSOCIATED BOTTLE-HANDLE ASSEMBLY

(30) Priorité: 04.01.2024 FR 2400036
(43) Date de publication de la demande: 09.07.2025
(73) Titulaire: Hodmeter, 76160 Darnétal (FR)
(72) Inventeur: BRÉMILTS, Antoine, 76160 Darnétal (FR)
(74) Mandataire: Cabinet Chaillot

(56) Documents cités:
- EP-B1- 1 094 927
- CA-A1- 2 557 639
- FR-A1- 2 494 179
- FR-A1- 2 541 622
- US-A- 5 783 138
- US-A1- 2006 073 288
- US-A1- 2010 104 885
- US-B1- 6 179 158
- US-B1- 6 338 415
- US-B1- 6 444 158

## Description

La présente invention concerne le domaine des bouteilles en matière thermoplastique, et porte en particulier sur une préforme dotée d'une interface de fixation de poignée comprenant une glissière de guidage en translation, sur une bouteille fabriquée par soufflage d'une telle préforme, et sur un ensemble bouteille-poignée associé. Une technique bien connue pour fabriquer une bouteille en matière thermoplastique consiste à réchauffer dans un four une préforme en matière thermoplastique, puis à souffler dans un moule la préforme réchauffée de manière à obtenir une bouteille dont la forme correspond à celle du moule. Il est également connu de rapporter des poignées sur des bouteilles de grand volume telles que des bonbonnes, afin de faciliter leur manipulation.

Actuellement, il existe deux principaux types de poignées rapportées sur des bonbonnes en matière thermoplastique soufflées à partir d'une préforme, à savoir :
- un premier type consistant en une poignée placée dans le moule avant le soufflage de la préforme réchauffée et dont deux ergots sont enveloppés par la paroi du fût de la bonbonne durant le soufflage de la préforme dans le moule ; et
- un second type consistant en une poignée emboîtée sur la circonférence du col de la bonbonne sous une collerette, cette poignée étant posée, à la sortie du moule, sur la bonbonne déjà formée, par le dessus du col en passant sous la collerette pour être maintenue.

Cependant, le premier type existant de poignée possède les inconvénients suivants :
- la connexion de la poignée sur la bonbonne n'est pas tenace, étant donné que la poignée est reliée à une partie soufflée plus ou moins souple du fût de la bonbonne ;
- la présence d'une cavité creuse et latérale dans le fût de la bonbonne (dans laquelle est disposée la poignée) entraîne un étirage supplémentaire de la matière au soufflage notamment dans les angles de la base de la bonbonne créant une variation d'épaisseur de la matière et alors une faiblesse structurelle au niveau bas du fût ; et
- le taux de rebut est élevé au soufflage du fait de la difficulté à trouver le bon réglage de chauffe de la préforme durant la production pour envelopper correctement les deux ergots de la poignée et éviter le percement de la préforme par lesdits ergots lors du soufflage.

En outre, le second type existant de poignée possède les inconvénients suivants :
- la poignée doit entourer la totalité de la circonférence du col de la bonbonne, de telle sorte qu'une quantité élevée de matière est nécessaire pour fabriquer la poignée ;
- l'orientation de la prise de la poignée n'est pas commode par un manutentionnaire en marche qui risque de se cogner les genoux dans la bonbonne; et
- la présence de la poignée sur le col peut gêner la pose de la bonbonne tête vers le bas sur une fontaine rafraîchissante de distribution d'eau.

Il existe également d'autres techniques connues pour souffler une bonbonne en matière thermoplastique incluant une poignée. Toutefois, ces techniques n'utilisent pas une préforme comme matière initiale mais directement du plastique sous forme de granulés ou de poudre par :
- extrusion d'une paraison de plastique suivie de son soufflage dans un moule prévoyant une poignée ; ou
- injection d'une préforme comprenant alors déjà une poignée suivie de son soufflage en bonbonne dans un moule immédiatement à chaud.

Cependant, avec ces techniques, la poignée n'est pas une partie ou pièce distincte et rapportée, mais est intégrée à la forme de la bonbonne dès sa formation initiale ou celle de la préforme intermédiaire. En outre, ces techniques impliquent des investissements lourds avec des températures bien plus élevées que la technique de réchauffage-soufflage d'une préforme.

Sur des formats plus petits et pour lesquels l'interaction entre la poignée et la bouteille soufflée est moins exigeante que pour une bonbonne par exemple de 20 kg, la technique de réchauffage-soufflage peut présenter d'autres approches pour la poignée dans lesquelles la poignée est fixée sur le fût de la bouteille soufflée à partir d'une préforme. La poignée peut, par exemple, être emboîtée sur une surface du fût présentant un tenon souple ou des emplacements pour des ergots, ou la poignée peut être collée dans une cavité préparée dans le fût de la bouteille. Toutefois, le col et l'épaule de la bouteille ne sont pas concernés par ces deux approches, et, au contraire, la poignée est en contact avec une surface soufflée (et donc moins rigide) du fût de la bouteille, ce qui ne permet pas de garantir la ténacité de la poignée sur la bouteille.

La demande de brevet européen EP3571124A1 décrit une bouteille avec une poignée fixée sur son fût, la poignée devant être placée dans le moule avant le soufflage de la préforme afin qu'une partie d'ancrage de la poignée soit enveloppée par la paroi du fût de la bouteille durant le soufflage de la préforme dans le moule. Cependant, comme indiqué plus haut, cette fixation par enveloppement d'une partie d'ancrage de la poignée par la paroi du fût de la bouteille lors du soufflage ne permet pas de garantir la ténacité et la rigidité de la fixation.

La demande de brevet européen EP3096929A1 décrit, notamment dans l'un de ses modes de réalisation particuliers, un procédé de fabrication d'un récipient à partir d'une préforme dotée de deux encoches de fixation dont l'une des deux est déplacée lors du soufflage, lesdites deux encoches de fixation servant à la fixation d'une poignée après soufflage. Cependant, aucune information supplémentaire n'est présente dans ce document concernant la structure des deux encoches de fixation et la méthode de fixation de la poignée sur ces deux encoches de fixation. La poignée semble simplement emboîtée sur les encoches de fixation, ce qui ne permet pas d'obtenir une fixation tenace de la poignée sur le récipient. En outre, étant donné que l'une des deux encoches de fixation est située sur le fût de la préforme, la poignée est ainsi reliée à une partie soufflée plus ou moins souple du fût du récipient, de telle sorte que la connexion de la poignée sur le récipient n'est pas optimale.

Les documents brevets US5783138A, CA2557639A1, US6179158B1, US6338415B1, US2010/104885A1, US2006/073288A1, FR2541622A1, FR2494179A1 et EP1094927B1 divulguent également l'état antérieur de la technique.

La présente invention vise à résoudre les inconvénients de l'état antérieur de la technique en proposant une préforme comprenant une interface de fixation de poignée formée d'un seul tenant sur la préforme et comportant une glissière de guidage en translation apte à permettre la fixation par coulissement d'une poignée. La glissière de guidage en translation formée sur la préforme permet ainsi, après soufflage de la préforme en bouteille, de fixer une poignée rapportée sur le col et/ou l'épaule de la bouteille par coulissement sur la glissière de guidage en translation, ce qui permet d'améliorer la rigidité et la ténacité de la fixation de la poignée rapportée sur la bouteille.

La présente invention a donc pour objet une préforme destinée à être soufflée en bouteille en matière thermoplastique, ladite préforme comprenant un corps cylindrique comportant un fût, un col et une zone de transition formée entre le fût et le col, la préforme comprenant en outre une interface de fixation de poignée formée d'un seul tenant sur au moins l'un parmi le col et la zone de transition de la préforme, caractérisée par le fait que ladite interface de fixation de poignée comprend une glissière de guidage en translation formée sur la surface externe de la préforme et apte à permettre la fixation par coulissement d'une poignée, ladite glissière de guidage en translation étant dotée de l'une parmi: une nervure de guidage en translation possédant une section transversale ayant une base à partir de laquelle s'étendent deux saillies à l'opposé l'une de l'autre; et une rainure de guidage en translation possédant une section transversale ayant une base à partir de laquelle s'étendent deux saillies à l'opposé l'une de l'autre.

La préforme peut être fabriquée par injection de matière thermoplastique.

Avantageusement, le fût de la préforme présente une épaisseur constante et permet de former, après soufflage de la préforme, le fût de la bouteille (le fût de la préforme étant la partie de la préforme la plus étirée à l'issue du soufflage d'où son épaisseur importante). L'extrémité du fût de la préforme opposée au col est fermée par un fond.

La zone de transition entre le fût et le col de la préforme présente une épaisseur inférieure ou égale à celle du fût et permet de former, après soufflage de la préforme, l'épaule de la bouteille.

Le col de la préforme n'est, quant à lui, pas déformé lors du soufflage et correspond au col de la bouteille. L'interface de fixation de poignée (en particulier, la glissière de guidage en translation) formée sur la préforme n'est pas déformée et reste intacte après le soufflage de la préforme en bouteille et permet ainsi la fixation d'une poignée rapportée sur la bouteille.

En particulier, lorsque la poignée rapportée possède une extrémité de fixation comprenant une partie coulisseau complémentaire de la glissière de guidage en translation de l'interface de fixation de poignée de la bouteille, ladite extrémité de fixation de la poignée peut ainsi être fixée sur l'interface de fixation de poignée par coulissement de la partie coulisseau de la poignée le long de la glissière de guidage en translation de l'interface de fixation de poignée de la bouteille.

La ténacité et la rigidité de la fixation entre la poignée et la bouteille sont ainsi améliorées grâce à la présence de la glissière de guidage en translation initialement formée sur la préforme.

L'interface de fixation de poignée est positionnée sur une zone non déformée à l'issue du soufflage de la préforme en bouteille, à savoir le col et/ou la zone de transition entre le col et le fût lorsque cette zone n'est pas étirée lors du soufflage de la préforme en bouteille pour rester fixe et alors assurer à la glissière de guidage en translation une stabilité dimensionnelle réelle et idéale à l'insertion postérieure de la poignée, permettant d'assurer la rigidité et la ténacité de l'assemblage. Il est à noter que l'étirage ou non de certaines zones de la préforme est lié au dessin du moule de soufflage final de la bouteille et non au dessin du moule d'injection de la préforme.

Lorsque la glissière de guidage en translation est dotée de la nervure de guidage en translation, l'extrémité de fixation de la poignée rapportée possède alors une rainure complémentaire de la nervure de guidage en translation de l'interface de fixation de poignée. Ainsi, la section transversale particulière de la nervure de guidage en translation avec ses deux saillies s'étendant à l'opposé l'une de l'autre permet d'assurer le guidage de l'extrémité de fixation de la poignée le long de la nervure de guidage en translation lors du coulissement de la rainure de l'extrémité de fixation de la poignée sur la nervure de guidage en translation, et permet également de garantir la ténacité et la rigidité de la fixation entre la poignée et l'interface de fixation de poignée. Et, lorsque la glissière de guidage en translation est dotée de la rainure de guidage en translation, l'extrémité de fixation de la poignée rapportée possède alors une nervure complémentaire de la rainure de guidage en translation de l'interface de fixation de poignée. Ainsi, la section transversale particulière de la rainure de guidage en translation avec ses deux saillies s'étendant à l'opposé l'une de l'autre permet d'assurer le guidage de l'extrémité de fixation de la poignée le long de la rainure de guidage en translation lors du coulissement de la nervure de l'extrémité de fixation de la poignée sur la rainure de guidage en translation, et permet également de garantir la ténacité et la rigidité de la fixation entre la poignée et l'interface de fixation de poignée.

Selon une caractéristique particulière de l'invention, la glissière de guidage en translation est l'une parmi :
- rectiligne et tangente à la circonférence externe de la préforme ;
- courbée et formée sur une partie de la circonférence externe de la préforme ; et
- rectiligne et formée selon la direction longitudinale de la préforme.

Ainsi, dans les deux premières variantes, la glissière de guidage en translation est horizontale (lorsque la bouteille est en position debout) de sorte que l'extrémité de fixation de la poignée doit être emboîtée sur la glissière par coulissement horizontal, alors que, dans la troisième variante, la glissière de guidage en translation est verticale (lorsque la bouteille est en position debout) de sorte que l'extrémité de fixation de la poignée doit être emboîtée sur la glissière par coulissement vertical.

Dans les trois variantes, la glissière de guidage en translation est formée uniquement sur une partie de la circonférence externe du col et/ou de la zone de transition de la préforme, et non sur toute la circonférence comme dans le cas pour une collerette formée habituellement sur un col de bouteille.

Selon une caractéristique particulière de l'invention, ladite nervure de guidage en translation possède une section transversale en forme de T.

La section transversale en forme de T de la nervure de guidage en translation (le fût du T jouant le rôle de la base, et la traverse du T jouant le rôle des deux saillies) est l'un des choix possibles pour une certaine commodité à la conception et au démoulage sur la préforme, mais d'autres formes, telles qu'une queue d'aronde, pourraient également être utilisées, sans s'écarter du cadre de la présente invention.

Selon une variante de l'invention, ladite rainure de guidage en translation possède une section transversale en forme de T.

La section transversale en forme de T de la rainure de guidage en translation (le fût du T jouant le rôle de la base, et la traverse du T jouant le rôle des deux saillies) est l'un des choix possibles pour une certaine commodité à la conception et au démoulage sur la préforme, mais d'autres formes, telles qu'une queue d'aronde, pourraient également être utilisées.

Selon une caractéristique particulière de l'invention, la nervure de guidage en translation est l'une parmi : rectiligne et tangente à la circonférence externe de la préforme ; et, courbée et formée sur une partie de la circonférence externe de la préforme ; et l'interface de fixation de poignée comprend en outre au moins l'un parmi un épaulement supérieur formé au-dessus de la nervure de guidage en translation et un épaulement inférieur formé en dessous de la nervure de guidage en translation.

Ainsi, l'épaulement supérieur, respectivement inférieur, de l'interface de fixation de poignée peut servir de butée ou contre-appui pour la partie supérieure, respectivement inférieure, de l'extrémité de fixation de la poignée, ce qui permet d'améliorer la rigidité de la fixation entre la poignée et l'interface de fixation de poignée de la bouteille.

Selon une caractéristique particulière de l'invention, un épaulement inférieur est formé en dessous de la nervure de guidage en translation et une rainure est ménagée dans l'épaulement inférieur de l'interface de fixation de poignée le long de la longueur de la nervure de guidage en translation.

Ainsi, la rainure ménagée dans l'épaulement inférieur de l'interface de fixation de poignée permet de recevoir à l'intérieur de celle-ci une saillie complémentaire formée en partie inférieure de l'extrémité de fixation de la poignée, ce qui permet de davantage améliorer la rigidité de l'assemblage et de compenser la souplesse des matières plastiques à l'étirement et à la compression.

Selon une caractéristique particulière de l'invention, la nervure ou rainure de guidage en translation est rectiligne et formée selon la direction longitudinale de la préforme, et l'interface de fixation de poignée comprend en outre facultativement l'une parmi : une butée inférieure formée à l'extrémité inférieure de la nervure ou rainure de guidage en translation ; et une butée supérieure formée à l'extrémité supérieure de la nervure ou rainure de guidage en translation.

Ainsi, la butée inférieure peut servir de butée à la partie inférieure de l'extrémité de fixation de la poignée lorsque la poignée est installée par coulissement vertical depuis le haut de la glissière de guidage en translation, tandis que la butée supérieure peut servir de butée à la partie supérieure de l'extrémité de fixation de la poignée lorsque la poignée est installée par coulissement vertical depuis le bas de la glissière de guidage en translation. La présente invention a également pour objet une bouteille en matière thermoplastique fabriquée par soufflage d'une préforme telle que décrite ci-dessus, caractérisée par le fait que ladite bouteille conserve, après soufflage de la préforme, l'interface de fixation de poignée qui est formée d'un seul tenant sur une zone non déformée après soufflage d'au moins l'un parmi le col et l'épaule de la bouteille, la glissière de guidage en translation de l'interface de fixation de poignée étant apte à permettre la fixation par coulissement d'une poignée sur la bouteille.

Par soufflage de la préforme, on entend soit un réchauffage-soufflage de la préforme, soit un soufflage directement après l'injection de la préforme lorsque cette dernière est encore chaude.

La préforme peut, par exemple, être réchauffée dans un four à lampes infrarouges, la présence de l'interface de fixation de poignée ne gênant en rien sa rotation sur elle-même et son exposition dans le four pour une chauffe homogène. Ensuite, la préforme peut être soufflée en bouteille (par exemple, en bonbonne) dans un moule présentant une cavité spécifique pour l'interface de fixation de poignée afin d'éviter la déformation de cette dernière lors du soufflage, et anticipant la présence future de la poignée, la bouteille soufflée ne subissant ensuite plus aucune modification intrinsèque. Enfin, une poignée rigide avec une partie coulisseau spécifique peut être installée par coulissement sur la glissière de guidage en translation de la bouteille, la poignée étant conçue pour que l'assemblage reste rigide sur la glissière de guidage en translation.

La partie de la préforme sur laquelle est formée l'interface de fixation de poignée n'étant pas modifiée au cours du soufflage de la préforme en bouteille, celle-ci et la glissière de guidage en translation ne sont donc pas déformées au cours du soufflage et restent bien des parties initialement injectées pour une stabilité optimale et une rigidité de l'assemblage de la poignée sur la bouteille.

Il est à noter que l'interface de fixation de poignée (et notamment sa glissière de guidage en translation) ne constitue pas une poignée en elle-même, mais nécessite l'ajout d'une poignée rapportée pour la fonction de préhension de la bouteille.

Selon une caractéristique particulière de l'invention, la partie de l'épaule de la bouteille qui se trouve en dessous de l'interface de fixation de poignée possède un renfoncement apte à permettre la disposition d'une poignée au-dessus de celui-ci.

Ainsi, ce renfoncement, formé lors du soufflage de la préforme en bouteille dans le moule, permet d'anticiper la présence de la poignée, et permet d'éviter que l'épaule de la bouteille ne vienne gêner l'installation de la poignée sur la bouteille.

Selon une caractéristique particulière de l'invention, la bouteille est de type bonbonne avec un volume compris entre 3 et 25 litres.

Ainsi, étant donné le poids important d'une bonbonne lorsque celle-ci est remplie de liquide (par exemple, une bonbonne d'eau destinée à être utilisée sur une fontaine à eau), la disposition d'une poignée rapportée sur cette bonbonne permet de faciliter sa manipulation, l'interface de fixation de poignée de la bonbonne permettant de garantir la rigidité de la fixation même avec le poids important de la bonbonne remplie, et une position de la poignée qui ne gêne pas la pose de la bonbonne sur la fontaine à eau.

La présente invention a en outre pour objet un ensemble bouteille-poignée, caractérisé par le fait qu'il comprend une bouteille telle que décrite ci-dessus et une poignée rapportée dont une extrémité de fixation comprend une partie coulisseau complémentaire de la glissière de guidage en translation de l'interface de fixation de poignée de la bouteille, ladite extrémité de fixation de la poignée étant fixée sur l'interface de fixation de poignée de la bouteille par coulissement de la partie coulisseau de la poignée le long de la glissière de guidage en translation de l'interface de fixation de poignée de la bouteille.

Ainsi, la présente invention permet de réaliser un assemblage solide et rigide de la poignée sur la bouteille (plus particulièrement, un assemblage solide et rigide de la partie coulisseau de la poignée sur la glissière de guidage en translation de la bouteille), pour assurer une bonne ténacité de l'ensemble, ce qui est nécessaire en raison du poids de la bouteille en statique et en dynamique (notamment dans le cas d'une bonbonne remplie d'un liquide tel que de l'eau), de l'orientation de la poignée par rapport au col et de la rigidité relative des matières plastiques injectées.

Selon une caractéristique particulière de l'invention, au moins l'une parmi l'interface de fixation de poignée de la bouteille et l'extrémité de fixation de la poignée possède un dispositif de blocage configuré, après coulissement de la partie coulisseau de la poignée le long de la glissière de guidage en translation de l'interface de fixation de poignée de la bouteille, pour bloquer la position de l'extrémité de fixation de la poignée sur l'interface de fixation de poignée de la bouteille.

Ainsi, le dispositif de blocage permet de verrouiller, de manière amovible ou non, la position de la poignée sur la bouteille en fin de course de coulissement sur la glissière de guidage en translation.

Selon une caractéristique particulière de l'invention, le dispositif de blocage comprend un crochet d'emboîtement élastiquement déformable qui est disposé sur l'une parmi l'extrémité de fixation de la poignée et l'interface de fixation de poignée de la bouteille et qui est configuré, après coulissement de la partie coulisseau de la poignée le long de la glissière de guidage en translation de l'interface de fixation de poignée de la bouteille, pour s'emboîter élastiquement sur l'autre parmi l'interface de fixation de poignée de la bouteille et l'extrémité de fixation de la poignée.

De préférence, lorsque la partie coulisseau de l'extrémité de fixation de la poignée est une rainure complémentaire de la glissière de guidage en translation de type nervure, la partie coulisseau de la poignée présente, à une extrémité de la rainure, une butée pour bloquer sa course sur la glissière de guidage en translation, et la partie coulisseau de la poignée porte, à l'autre extrémité de la rainure, le crochet d'emboîtement qui est configuré, en fin de course de coulissement, pour s'emboîter sur l'interface de fixation de poignée et ainsi bloquer la position de la poignée en fin de coulissement de la rainure sur la glissière de guidage en translation.

Selon une variante de l'invention, le dispositif de blocage comprend un plot élastiquement déformable qui est disposé sur l'une parmi l'extrémité de fixation de la poignée et l'interface de fixation de poignée de la bouteille et qui est configuré, après coulissement de la partie coulisseau de la poignée le long de la glissière de guidage en translation de l'interface de fixation de poignée de la bouteille, pour s'emboîter élastiquement dans un évidement ménagé sur l'autre parmi l'interface de fixation de poignée de la bouteille et l'extrémité de fixation de la poignée.

De préférence, lorsque la partie coulisseau de l'extrémité de fixation de la poignée est une rainure complémentaire de la glissière de guidage en translation de type nervure, la partie coulisseau de la poignée présente, à une extrémité de la rainure, une butée pour bloquer sa course sur la glissière de guidage en translation, et le plot est positionné sur l'interface de fixation de poignée, auquel correspond un évidement formé dans la rainure de la poignée pour permettre la stabilisation de l'ensemble après compression du plot pendant le coulissement de la poignée sur la glissière de guidage en translation.

Selon une caractéristique particulière de l'invention, chacune de la bouteille et de la poignée est en une matière thermoplastique parmi du poly(téréphtalate d'éthylène) (PET), du polypropylène (PP), du polycarbonate (PC), de l'acide polylactique (PLA), du poly(naphtalate d'éthylène) (PEN), du polystyrène (PS), du polyéthersulfone (PES), du polyphénylsulfone (PPSU), et du PET recyclé (rPET).

La matière de la poignée est de préférence du même grade de plastique que la bouteille pour un recyclage plus aisé. Il est à noter que la bouteille et la poignée pourraient également être en une quelconque autre matière thermoplastique ou en un quelconque mélange de matières thermoplastiques (typiquement dans le cas du rPET ou d'un autre copolyester tel que le TRITAN^{®}).

Comparée à une poignée placée dans un moule avant le soufflage de la préforme réchauffée et dont les ergots sont enveloppés par la paroi de la bouteille durant le soufflage de la préforme dans le moule, la présente invention possède les avantages suivants :
- une tenue réelle de la poignée bien connectée à une partie rigide de la bouteille (à savoir, la glissière de guidage en translation formée sur le col et/ou l'épaule de la bouteille) et non à une partie soufflée plus ou moins souple de la bouteille ;
- une meilleure position de la poignée pour faciliter la préhension de la bouteille posée au sol ou sur un support ;
- une meilleure répartition de la matière thermoplastique sur l'ensemble de la bouteille du fait de l'absence de cavité creuse et latérale qui entraîne un étirage supplémentaire de la matière au soufflage notamment dans les angles de la base de la bouteille créant une variation d'épaisseur de la matière et alors une faiblesse structurelle au niveau bas du fût ; et
- un taux de rebut réduit au soufflage, étant donné qu'aucun percement de la préforme par les ergots de la poignée n'est possible lors du soufflage.

En outre, comparée à une poignée emboîtée, à la sortie du moule, sur la circonférence du col sous une collerette de la bouteille, la présente invention possède les avantages suivants :
- une meilleure intégration de la poignée au profil de l'épaule de la bouteille du fait de la position de la glissière de guidage en translation et de la rigidité de l'assemblage ;
- une économie de matière étant donné que l'extrémité de fixation de la poignée n'englobe pas totalement la circonférence du col de la bouteille ; et
- l'orientation radiale de la prise de la poignée (et non tangente) évite au manutentionnaire en marche de cogner ses genoux contre la bouteille.

Pour mieux illustrer l'objet de la présente invention, on va en décrire ci-après, à titre illustratif et non limitatif, des modes de réalisation préférés, avec référence aux dessins annexés.

Sur ces dessins :
[Fig. 1] est une vue de côté d'une préforme selon un premier mode de réalisation de la présente invention ;
[Fig. 2] est une vue en perspective de la préforme de la Figure 1 ;
[Fig. 3] est une autre vue en perspective de la préforme de la Figure 1 sur laquelle l'emplacement de la poignée est représenté ;
[Fig. 4] est une vue en coupe de l'interface de fixation de poignée selon le premier mode de réalisation dans laquelle est fixée une poignée ;
[Fig. 5] est une vue en coupe d'une interface de fixation de poignée selon une variante de l'invention dans laquelle est fixée une poignée ;
[Fig. 6] est une vue de côté d'une bouteille fabriquée par soufflage de la préforme de la Figure 1,
[Fig. 7] est une vue de côté de la bouteille de la Figure 6 sur laquelle une poignée est fixée ;
[Fig. 8] est une vue de côté d'une bouteille fabriquée par soufflage d'une préforme selon un second mode de réalisation de l'invention ;
[Fig. 9] est une vue en perspective d'une poignée selon le premier mode de réalisation de l'invention ;
[Fig. 10] est une vue en coupe d'un dispositif de blocage selon le premier mode de réalisation de l'invention ; et
[Fig. 11] est une vue en coupe d'un dispositif de blocage selon un autre mode de réalisation de l'invention.

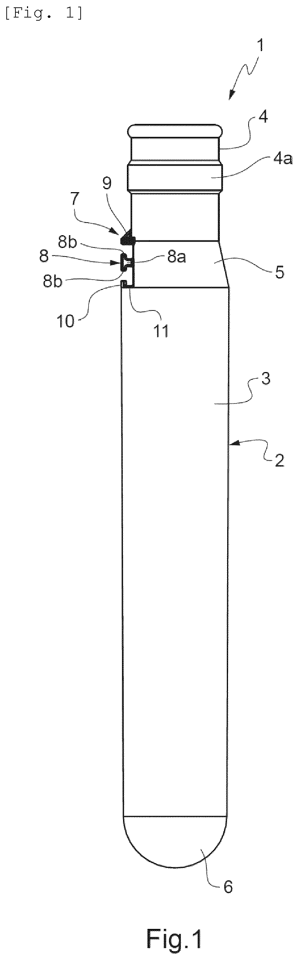

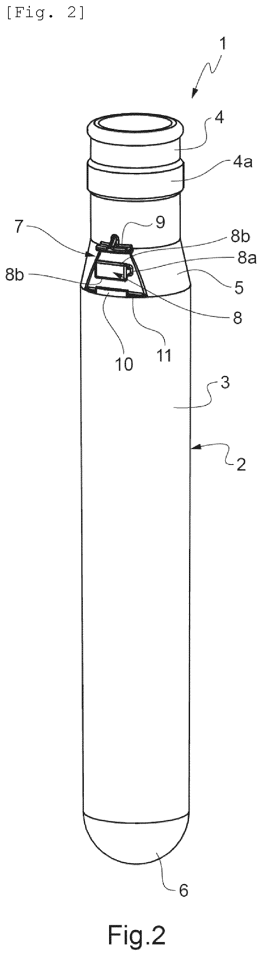

Si l'on se réfère aux Figures 1 et 2, on peut voir qu'il y est représenté une préforme 1 selon un premier mode de réalisation de la présente invention.

La préforme 1 est fabriquée par injection de matière thermoplastique, et est destinée à être soufflée soit directement après l'injection lorsque cette dernière est encore chaude, soit après réchauffage de cette dernière, en une bouteille telle qu'une bonbonne.

La préforme 1 comprend un corps cylindrique 2 comportant un fût 3, un col 4 et une zone de transition 5 formée entre le fût 3 et le col 4.

L'extrémité du fût 3 de la préforme 1 opposée au col 4 est fermée par un fond 6.

Bien que le fond 6 soit en demi-sphère dans ce mode de réalisation spécifique, celui-ci pourrait également être en cône ou en dôme pour une optimisation de l'utilisation de la matière à l'injection comme au soufflage, sans s'écarter du cadre de la présente invention.

Le fût 3 de la préforme 1 présente une épaisseur constante et permet de former, après soufflage de la préforme 1, le fût d'une bouteille.

La zone de transition 5 entre le fût 3 et le col 4 de la préforme 1 présente une épaisseur inférieure ou égale à celle du fût 3 et permet de former, après soufflage de la préforme 1, l'épaule de la bouteille.

Le col 4 de la préforme 1 (qui est dotée d'un renflement 4a permettant un bon alignement de la jupe du bouchon lors de sa pose ultérieure sur la préforme soufflée en bonbonne) n'est, quant à lui, pas déformé lors du soufflage et correspond au col de la bouteille.

La préforme 1 comprend en outre une interface de fixation de poignée 7 formée d'un seul tenant sur le col 4 et la zone de transition 5 de la préforme 1.

Il est à noter que l'interface de fixation de poignée 7 pourrait également être formée uniquement sur le col 4 ou uniquement sur la zone de transition 5 de la préforme 1, sans s'écarter du cadre de la présente invention. L'interface de fixation de poignée 7 comprend une glissière de guidage en translation 8 formée sur une partie de la surface externe de la zone de transition 5 de la préforme 1, ladite glissière de fixation de poignée 8 permettant la fixation par coulissement d'une poignée après soufflage de la préforme 1 en bouteille.

Le moule de soufflage dans lequel la préforme 1 est soufflée en bouteille est conçu de telle sorte que le col 4 et la partie de la zone de transition 5 sur laquelle est formée l'interface de fixation de poignée 7 ne sont pas déformés lors du soufflage de la préforme 1 en bouteille, l'interface de fixation de poignée 7 restant ainsi intacte sur la bouteille après le soufflage de la préforme 1.

La glissière de guidage en translation 8 est une nervure de guidage en translation qui est rectiligne et tangente à la circonférence externe de la préforme 1, de telle sorte que, après soufflage de la préforme 1 en bouteille, la glissière de guidage en translation 8 est horizontale (lorsque la bouteille est en position debout) et une poignée rapportée peut être emboîtée sur la glissière de guidage en translation 8 par coulissement horizontal sur celle-ci.

Il est à noter que la glissière de guidage en translation 8 pourrait également être courbée et formée sur une partie de la circonférence externe de la préforme 1 ou encore droite et orientée verticalement selon la direction longitudinale de la préforme 1, sans s'écarter du cadre de la présente invention.

La glissière de guidage en translation 8 de type nervure possède une section transversale ayant une base 8a fixée à la zone de transition 5 de la préforme 1 et à partir de laquelle deux saillies 8b supérieure et inférieure s'étendent à l'opposé l'une de l'autre.

En particulier, la glissière de guidage en translation 8 de type nervure possède une section transversale en forme de T. Toutefois, la glissière de guidage en translation 8 pourrait également avoir une quelconque autre section transversale ayant une base 8a et deux saillies opposées 8b, telle qu'une queue d'aronde, sans s'écarter du cadre de la présente invention.

L'interface de fixation de poignée 7 comprend en outre un épaulement supérieur 9 formé au-dessus de la glissière de guidage en translation 8 de type nervure et un épaulement inférieur 10 formé en dessous de la glissière de guidage en translation 8 de type nervure.

En outre, une rainure 11 est ménagée dans l'épaulement inférieur 10 de l'interface de fixation de poignée 7 le long de la longueur de la glissière de guidage en translation 8 de type nervure.

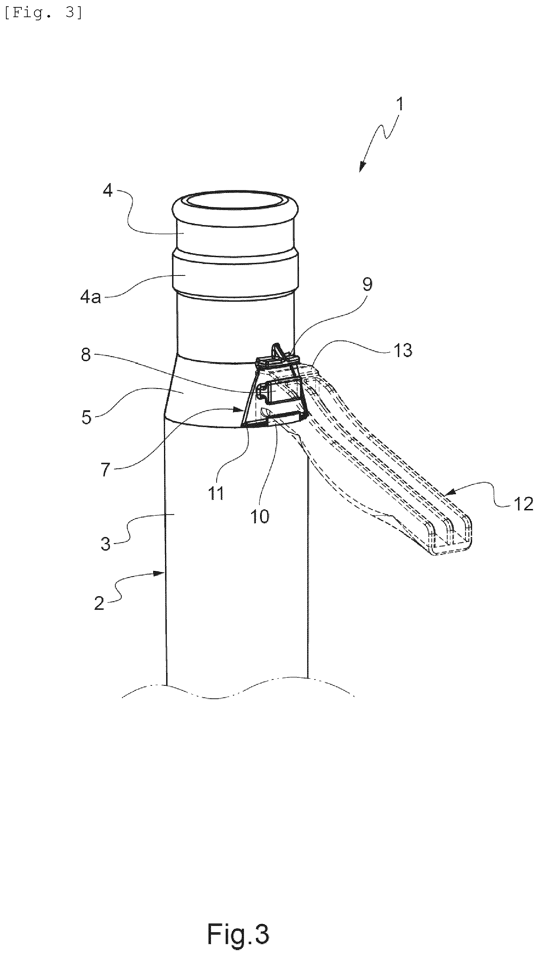

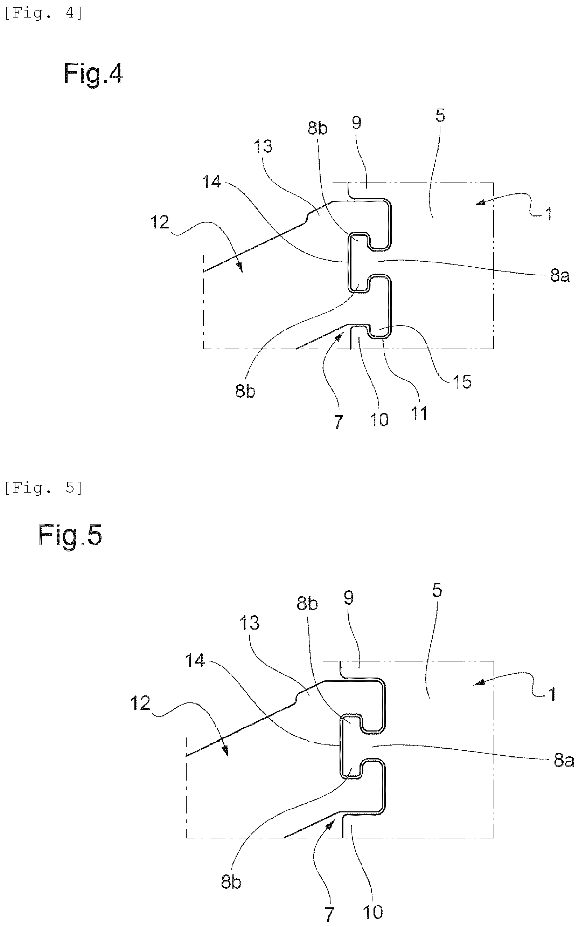

Si l'on se réfère aux Figures 3 et 4, on peut voir qu'il y est représenté la préforme 1 avec une poignée 12 (représentée en pointillé sur la Figure 3) fixée sur l'interface de fixation de poignée 7.

Bien que la poignée 12 ait été représentée directement fixée sur la préforme 1, l'homme du métier comprendra qu'en pratique la préforme 1 devra d'abord être soufflée en bouteille avant de procéder au montage de la poignée 12 sur l'interface de fixation de poignée 7 de la bouteille issue du soufflage de la préforme 1.

L'extrémité de fixation 13 de la poignée 12 possède une rainure 14 complémentaire de la glissière de guidage en translation 8 de type nervure de l'interface de fixation de poignée 7.

La glissière de guidage en translation 8 permet ainsi d'assurer le guidage de l'extrémité de fixation 13 de la poignée 12 le long de celle-ci lors du coulissement horizontal de la rainure 14 de l'extrémité de fixation 13 de la poignée 12 sur la glissière de guidage en translation 8 de type nervure de l'interface de fixation de poignée 7, et permet également de garantir la ténacité et la rigidité de la fixation entre la poignée 12 et l'interface de fixation de poignée 7.

Il est à noter que la glissière de guidage en translation 8 pourrait également être dotée d'une rainure de guidage en translation (au lieu d'une nervure de guidage en translation) possédant une section transversale ayant une base à partir de laquelle s'étendent deux saillies à l'opposé l'une de l'autre (de préférence une section transversale en forme de T), sans s'écarter du cadre de la présente invention, auquel cas l'extrémité de fixation 13 de la poignée 12 posséderait alors une nervure (au lieu d'une rainure) complémentaire de la glissière de guidage en translation 8 de type rainure de l'interface de fixation de poignée 7.

Comme le montre la Figure 4, l'épaulement supérieur 9 de l'interface de fixation de poignée 7 sert de butée (ou contre-appui) pour la partie supérieure de l'extrémité de fixation 13 de la poignée 12, tandis que l'épaulement inférieur 10 de l'interface de fixation de poignée 7 sert de butée (ou contre-appui) pour la partie inférieure de l'extrémité de fixation 13 de la poignée 12, ce qui permet d'améliorer la rigidité de la fixation entre la poignée 12 et l'interface de fixation de poignée 7.

En outre, la rainure 11 ménagée dans l'épaulement inférieur 10 de l'interface de fixation de poignée 7 reçoit à l'intérieur de celle-ci (par coulissement) une saillie (ou languette) 15 complémentaire formée en partie inférieure de l'extrémité de fixation 13 de la poignée 12, ce qui permet de davantage améliorer la rigidité de l'assemblage et de compenser la souplesse des matières plastiques à l'étirement et à la compression.

Si l'on se réfère à la Figure 5, on peut voir qu'il y est représenté une variante du premier mode de réalisation dans laquelle l'interface de fixation de poignée 7 ne possède pas de rainure dans son épaulement inférieur 10. La partie inférieure de l'extrémité de fixation 13 de la poignée 12 ne possède ainsi pas de saillie (ou languette) et est directement en contact avec l'épaulement inférieur 10.

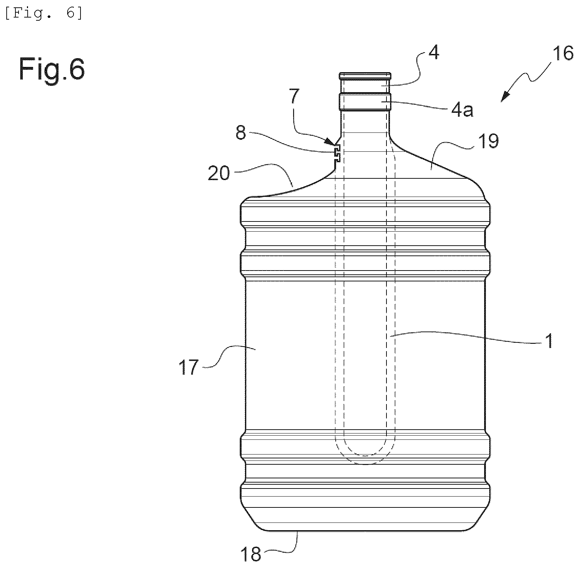

Si l'on se réfère à la Figure 6, on peut voir qu'il y est représenté une bouteille 16 en matière thermoplastique fabriquée par soufflage de la préforme 1 selon le premier mode de réalisation.

A des fins de meilleure compréhension, la position initiale de la préforme 1 avant soufflage a été représentée en pointillé sur la Figure 6. Toutefois, l'homme du métier comprendra qu'après le soufflage de la préforme 1 en bouteille 16, seule la bouteille 16 subsiste.

Par soufflage de la préforme 1, on entend soit un réchauffage-soufflage de la préforme 1, soit un soufflage directement après l'injection de la préforme 1 lorsque cette dernière est encore chaude.

La préforme 1 peut, par exemple, être réchauffée dans un four à lampes infrarouges, la présence de l'interface de fixation de poignée 7 ne gênant en rien sa rotation sur elle-même et son exposition dans le four pour une chauffe homogène. Ensuite, la préforme 1 peut être soufflée en bouteille 16 dans un moule présentant une cavité spécifique pour l'interface de fixation de poignée 7 afin d'éviter la déformation de cette dernière lors du soufflage.

Après le soufflage de la préforme 1 dans un moule approprié à la forme finale de la bouteille 16, le fût 3 de la préforme 1 est déformé par étirement en un fût 17 de la bouteille 16, le fond 6 de la préforme 1 est déformé par étirement en un fond 18 de la bouteille 16, une partie de la zone de transition 5 de la préforme (à savoir, la partie ne portant pas l'interface de fixation de poignée 7) est déformée par étirement en une épaule 19 de la bouteille 16, et le col 4 de la préforme 1 n'est pas déformé et constitue celui de la bouteille 16 après soufflage.

Ainsi, la bouteille 16 conserve, après soufflage de la préforme 1, l'interface de fixation de poignée 7 qui est formée d'un seul tenant sur une zone non déformée après soufflage de la bouteille 16 (à savoir, le col 4 et/ou une partie de la circonférence de l'épaule 19 de la bouteille 16).

Il est à noter que la bouteille 16 représentée en Figure 6 est de type bonbonne (ayant, par exemple, un volume compris entre 3 et 25 litres), mais pourrait également être d'un quelconque autre type (en fonction de la forme du moule utilisé lors du soufflage), sans s'écarter du cadre de la présente invention.

La partie de l'épaule 19 de la bouteille 16 qui se trouve directement en dessous de l'interface de fixation de poignée 7 possède un renfoncement 20 (formé à l'aide du moule de soufflage) de manière à éviter que l'épaule 19 de la bouteille 16 ne vienne gêner l'installation de la poignée 12 sur la bouteille 16.

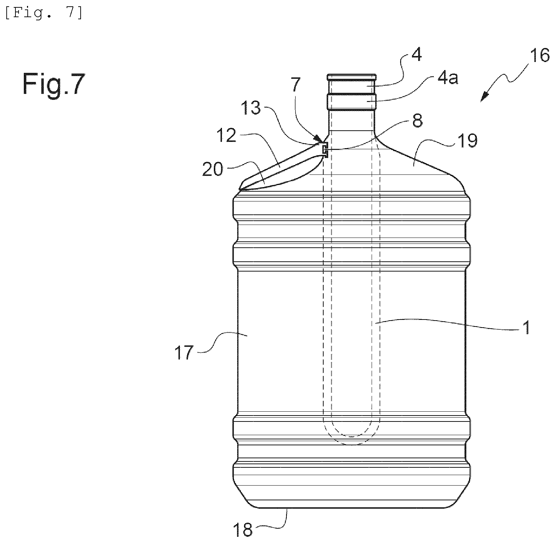

Si l'on se réfère à la Figure 7, on peut voir qu'il y est représenté la bouteille 16 sur laquelle la poignée 12 est fixée sur l'interface de fixation de poignée 7 de la bouteille 16.

L'extrémité de fixation 13 de la poignée 12 comprend une partie coulisseau (de type rainure 14) complémentaire de la glissière de guidage en translation 8 de type nervure de l'interface de fixation de poignée 7 de la bouteille 16.

L'extrémité de fixation 13 de la poignée 12 peut ainsi être fixée sur l'interface de fixation de poignée 7 de la bouteille 16 par coulissement de la partie coulisseau (à savoir, la rainure 14) de la poignée 12 le long de la glissière de guidage en translation 8 de l'interface de fixation de poignée 7 de la bouteille 16.

La présente invention permet ainsi de réaliser un assemblage solide et rigide de la poignée 12 sur la bouteille 16, pour assurer une bonne ténacité de l'ensemble, ce qui est nécessaire en raison du poids de la bouteille de type bonbonne 16 en statique et en dynamique (notamment dans le cas d'une bonbonne remplie d'un liquide tel que de l'eau), de l'orientation de la poignée 12 par rapport au col 4 et de la rigidité relative des matières plastiques injectées.

Avantageusement, la forme de la poignée 12 est conçue de telle sorte qu'une fois fixée sur l'interface de fixation de poignée 7, la poignée 12 est disposée dans le renfoncement 20 formé dans l'épaule 19 de la bouteille 16, et la partie supérieure de la poignée 12 est alignée sur l'épaule 19 (hors renfoncement 20) de la bouteille 16. Par conséquent, la présence de la poignée 12 sur la bouteille 16 n'empêche pas l'installation de la bouteille 16 de type bonbonne dans une fontaine à eau.

Chacune de la bouteille 16 (ou préforme 1 avant soufflage) et de la poignée 12 est en une matière thermoplastique parmi du poly(téréphtalate d'éthylène) (PET), du polypropylène (PP), du polycarbonate (PC), de l'acide polylactique (PLA), du poly(naphtalate d'éthylène) (PEN), du polystyrène (PS), du polyéthersulfone (PES), du polyphénylsulfone (PPSU), et du PET recyclé (rPET).

La matière de la poignée 12 est de préférence du même grade de plastique que la bouteille 16 pour un recyclage plus aisé.

Il est à noter que la bouteille 16 et la poignée 12 pourraient également être en une quelconque autre matière thermoplastique ou en un quelconque mélange de matières thermoplastiques (typiquement dans le cas du rPET ou d'un autre copolyester tel que le TRITAN^{®}), sans s'écarter du cadre de la présente invention.

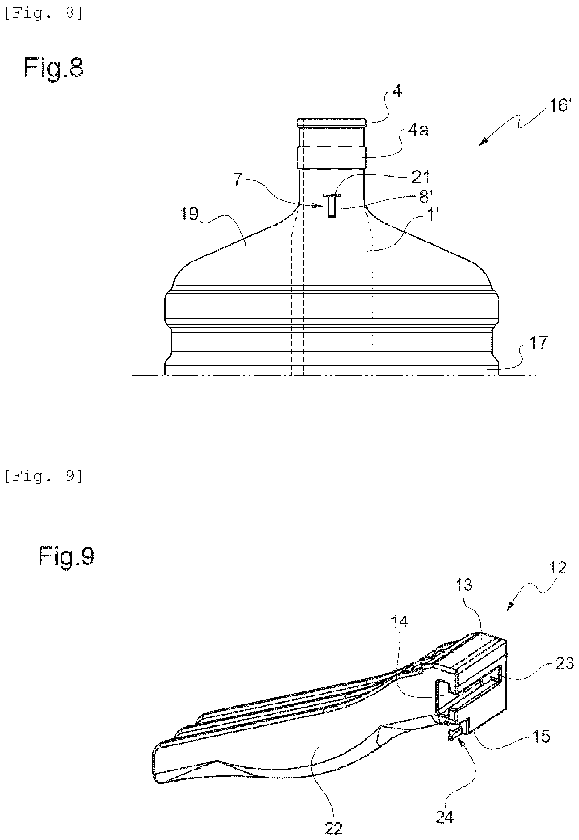

Si l'on se réfère à la Figure 8, on peut voir qu'il y est représenté une bouteille 16' fabriquée par soufflage d'une préforme 1' selon un second mode de réalisation de l'invention.

Les éléments communs entre le premier mode de réalisation de l'invention sur les Figures 1 \à 7 et ce second mode de réalisation de l'invention portent le même chiffre de référence et ne seront pas décrits plus en détail ici lorsqu'ils sont de structures identiques.

La préforme 1' selon le second mode de réalisation est identique à la préforme 1 selon le premier mode de réalisation, à l'exception du fait que l'interface de fixation de poignée 7 est constituée d'une glissière de guidage en translation 8' de type nervure qui est rectiligne et formée selon la direction longitudinale de la préforme 1' (c'est-à-dire, verticale lorsque la bouteille 16' est en position debout), et d'une butée supérieure 21 formée à l'extrémité supérieure de la glissière de guidage en translation 8' de type nervure. L'extrémité de fixation 13 de la poignée 12 (qui comporte une rainure complémentaire de la glissière de guidage en translation 8' de type nervure) peut ainsi être montée sur l'interface de fixation de poignée 7 de la bouteille 16' par coulissement vertical de l'extrémité de fixation 13 de la poignée 12 le long de la glissière de guidage en translation 8'. La butée supérieure 21 sert alors de butée à la partie supérieure de l'extrémité de fixation 13 de la poignée 12 lorsque la poignée 12 est installée par coulissement vertical depuis le bas de la glissière de guidage en translation 8'.

Il est à noter que l'interface de fixation de poignée 7 pourrait également comprendre (à la place de la butée supérieure 21) une butée inférieure formée à l'extrémité inférieure de la glissière de guidage en translation 8', sans s'écarter du cadre de la présente invention, la butée inférieure servant alors de butée à la partie inférieure de l'extrémité de fixation 13 de la poignée 12 lorsque la poignée 12 est installée par coulissement vertical depuis le haut de la glissière de guidage en translation 8'.

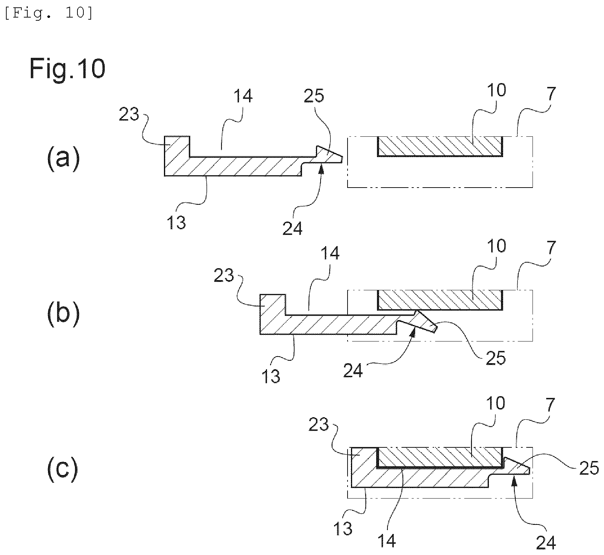

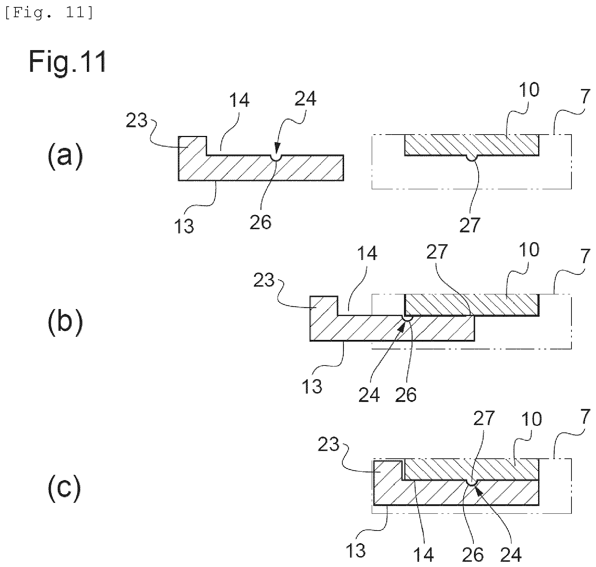

Il est également à noter que l'interface de fixation de poignée 7 pourrait également ne comprendre aucune butée supérieure 21 ou inférieure, sans s'écarter du cadre de la présente invention, la course de l'extrémité de fixation 13 de la poignée 12 sur l'interface de fixation de poignée 7 étant alors uniquement limitée par un dispositif de blocage tel que celui décrit en référence à la Figure 10 ou à la Figure 11.

En outre, la glissière de guidage en translation 8' de type nervure verticale pourrait également être remplacée par une glissière de guidage en translation de type rainure verticale (apte à coopérer avec une nervure complémentaire formée dans l'extrémité de fixation 13 de la poignée 12), sans s'écarter du cadre de la présente invention.

Si l'on se réfère à la Figure 9, on peut voir qu'il y est représenté la poignée 12 pouvant être fixée sur l'interface de fixation de poignée 7 de la bouteille 16 selon le premier mode de réalisation de l'invention.

La poignée 12 comprend une partie de préhension 22 (apte à être saisie par un utilisateur afin de fixer la poignée 12 sur la bouteille 16 puis de déplacer la bouteille 16) et l'extrémité de fixation 13 dans laquelle est formée la rainure 14 complémentaire de la glissière de guidage en translation 8 de l'interface de fixation de poignée 7 de la bouteille 16.

Il est à noter que la partie de préhension 22 de la poignée 12 possède une forme de manche, mais pourrait également prendre une quelconque autre forme apte à être saisie par la main d'un utilisateur, sans s'écarter du cadre de la présente invention.

L'extrémité de fixation 13 de la poignée 12 présente, à l'une des deux extrémités de la rainure 14, une butée 23 permettant de bloquer la course de la poignée 12 sur la glissière de guidage en translation 8.

En outre, l'extrémité de fixation 13 de la poignée 12 porte, en partie inférieure, au niveau de l'autre des deux extrémités de la rainure 14, un dispositif de blocage 24 (qui sera décrit plus en détail à la Figure 10) permettant, après coulissement de l'extrémité de fixation 13 de la poignée 12 le long de la glissière de guidage en translation 8 de l'interface de fixation de poignée 7 de la bouteille 16, de bloquer la position de l'extrémité de fixation 13 de la poignée 12 sur l'interface de fixation de poignée 7 de la bouteille 16.

Il est à noter que le dispositif de blocage 24 pourrait également être disposé sur l'interface de fixation de poignée 7 ou à la fois sur l'extrémité de fixation 13 de la poignée 12 et l'interface de fixation de poignée 7, sans s'écarter du cadre de la présente invention.

Si l'on se réfère à la Figure 10, on peut voir qu'il y est représenté le dispositif de blocage 24 de la poignée 12 et l'interface de fixation de poignée 7 de la bouteille 16 à différentes étapes du coulissement.

Le dispositif de blocage 24 est constitué d'un crochet d'emboîtement 25 élastiquement déformable qui est disposé sur l'extrémité de fixation 13 de la poignée 12, à l'opposé de la butée 23.

A l'étape (a) sur la Figure 10, la poignée 12 n'est pas encore installée sur l'interface de fixation de poignée 7 de la bouteille 16.

A l'étape (b) sur la Figure 10, l'extrémité de fixation 13 de la poignée 12 est en cours de coulissement sur l'interface de fixation de poignée 7 (par coulissement de la rainure 14 de la poignée 12 le long de la glissière de guidage en translation 8 de type nervure de l'interface de fixation de poignée 7). Lors du coulissement, le crochet d'emboîtement 25 de la poignée 12 se déforme élastiquement contre l'épaulement inférieur 10 de l'interface de fixation de poignée 7 de la bouteille 16.

A l'étape (c) sur la Figure 10, en fin de coulissement lorsque la butée 23 de la poignée 12 vient au contact de l'une des deux extrémités de l'épaulement inférieur 10, le crochet d'emboîtement 25 revient à sa position d'origine et s'emboîte alors élastiquement sur l'autre des deux extrémités de l'épaulement inférieur 10, ce qui permet de bloquer la position de la poignée 12 sur la bouteille 16. Si l'on se réfère à la Figure 11, on peut voir qu'il y est représenté le dispositif de blocage 24 de la poignée 12 selon un autre mode de réalisation et l'interface de fixation de poignée 7 de la bouteille 16 à différentes étapes du coulissement.

Contrairement à la Figure 10, dans cet autre mode de réalisation, le dispositif de blocage 24 est constitué d'un plot 27 élastiquement déformable qui est disposé sur l'épaulement inférieur 10 de l'interface de fixation de poignée 7 de la bouteille 16, et d'un évidement 26 correspondant ménagé à l'intérieur de la rainure 14 de l'extrémité de fixation 13 de la poignée 12.

Il est à noter que le plot 27 et l'évidement 26 pourraient également être respectivement formés sur la rainure 14 de la poignée 12 et l'épaulement inférieur 10 de la bouteille 16, sans s'écarter du cadre de la présente invention.

A l'étape (a) sur la Figure 11, la poignée 12 n'est pas encore installée sur l'interface de fixation de poignée 7 de la bouteille 16.

A l'étape (b) sur la Figure 11, l'extrémité de fixation 13 de la poignée 12 est en cours de coulissement sur l'interface de fixation de poignée 7 (par coulissement de la rainure 14 de la poignée 12 le long de la glissière de guidage en translation 8 de type nervure de l'interface de fixation de poignée 7). Le plot 27 se comprime alors par déformation élastique pendant le coulissement.

A l'étape (c) sur la Figure 11, en fin de coulissement lorsque la butée 23 de la poignée 12 vient au contact de l'épaulement inférieur 10, le plot 27 s'emboîte alors élastiquement dans l'évidement 26, ce qui permet de bloquer la position de la poignée 12 sur la bouteille 16. Il est bien entendu que les modes de réalisation particuliers qui viennent d'être décrits ont été donnés à titre indicatif et non limitatif.

## Revendications

1. Préforme (1 ; 1') destinée à être soufflée en bouteille (16 ; 16') en matière thermoplastique, ladite préforme (1 ; 1') comprenant un corps cylindrique (2) comportant un fût (3), un col (4) et une zone de transition (5) formée entre le fût (3) et le col (4), la préforme (1 ; 1') comprenant en outre une interface de fixation de poignée (7) formée d'un seul tenant sur au moins l'un parmi le col (4) et la zone de transition (5) de la préforme (1 ; 1'), **caractérisée par le fait que** ladite interface de fixation de poignée (7) comprend une glissière de guidage en translation (8 ; 8') formée sur la surface externe de la préforme (1 ; 1') et apte à permettre la fixation par coulissement d'une poignée (12), ladite glissière de guidage en translation (8 ; 8') étant dotée de l'une parmi :
- une nervure de guidage en translation possédant une section transversale ayant une base (8a) à partir de laquelle s'étendent deux saillies (8b) à l'opposé l'une de l'autre ; et
- une rainure de guidage en translation possédant une section transversale ayant une base à partir de laquelle s'étendent deux saillies à l'opposé l'une de l'autre.

2. Préforme (1 ; 1') selon la revendication 1, **caractérisée par le fait que** la glissière de guidage en translation (8 ; 8') est l'une parmi :
- rectiligne et tangente à la circonférence externe de la préforme (1) ;
- courbée et formée sur une partie de la circonférence externe de la préforme (1) ; et
- rectiligne et formée selon la direction longitudinale de la préforme (1').

3. Préforme (1 ; 1') selon la revendication 1 ou 2, **caractérisée par le fait que** ladite nervure de guidage en translation possède une section transversale en forme de T.

4. Préforme (1 ; 1') selon la revendication 1 ou 2, **caractérisée par le fait que** ladite rainure de guidage en translation possède une section transversale en forme de T.

5. Préforme (1) selon l'une des revendications 1 à 3, **caractérisée par le fait que** la nervure de guidage en translation est l'une parmi :
- rectiligne et tangente à la circonférence externe de la préforme (1) ; et
- courbée et formée sur une partie de la circonférence externe de la préforme (1) ;
et l'interface de fixation de poignée (7) comprend en outre au moins l'un parmi un épaulement supérieur (9) formé au-dessus de la nervure de guidage en translation et un épaulement inférieur (10) formé en dessous de la nervure de guidage en translation.

6. Préforme (1) selon la revendication 5, **caractérisée par le fait qu'**un épaulement inférieur (10) est formé en dessous de la nervure de guidage en translation et qu'une rainure (11) est ménagée dans l'épaulement inférieur (10) de l'interface de fixation de poignée (7) le long de la longueur de la nervure de guidage en translation.

7. Préforme (1') selon l'une des revendications 1 à 4, **caractérisée par le fait que** la nervure ou rainure de guidage en translation est rectiligne et formée selon la direction longitudinale de la préforme (1'), et l'interface de fixation de poignée (7) comprend en outre facultativement l'une parmi :
- une butée inférieure formée à l'extrémité inférieure de la nervure ou rainure de guidage en translation ; et
- une butée supérieure (21) formée à l'extrémité supérieure de la nervure ou rainure de guidage en translation.

8. Bouteille (16 ; 16') en matière thermoplastique fabriquée par soufflage d'une préforme (1 ; 1') selon l'une des revendications 1 à 7, **caractérisée par le fait que** ladite bouteille (16 ; 16') conserve, après soufflage de la préforme (1 ; 1'), l'interface de fixation de poignée (7) qui est formée d'un seul tenant sur une zone non déformée après soufflage d'au moins l'un parmi le col (4) et l'épaule (19) de la bouteille (16 ; 16'), la glissière de guidage en translation (8 ; 8') de l'interface de fixation de poignée (7) étant apte à permettre la fixation par coulissement d'une poignée (12) sur la bouteille (16 ; 16').

9. Bouteille (16 ; 16') selon la revendication 8, **caractérisée par le fait que** la partie de l'épaule (19) de la bouteille (16 ; 16') qui se trouve en dessous de l'interface de fixation de poignée (7) possède un renfoncement (20) apte à permettre la disposition d'une poignée (12) au-dessus de celui-ci.

10. Bouteille (16 ; 16') selon la revendication 8 ou 9, **caractérisée par le fait que** la bouteille (16 ; 16') est de type bonbonne avec un volume compris entre 3 et 25 litres.

11. Ensemble bouteille-poignée, **caractérisé par le fait qu'**il comprend une bouteille (16 ; 16') selon l'une des revendications 8 à 10 et une poignée (12) rapportée dont une extrémité de fixation (13) comprend une partie coulisseau complémentaire de la glissière de guidage en translation (8 ; 8') de l'interface de fixation de poignée (7) de la bouteille (16 ; 16'), ladite extrémité de fixation (13) de la poignée (12) étant fixée sur l'interface de fixation de poignée (7) de la bouteille (16 ; 16') par coulissement de la partie coulisseau de la poignée (12) le long de la glissière de guidage en translation (8 ; 8') de l'interface de fixation de poignée (7) de la bouteille (16 ; 16').

12. Ensemble bouteille-poignée selon la revendication 11, **caractérisé par le fait qu'**au moins l'une parmi l'interface de fixation de poignée (7) de la bouteille (16 ; 16') et l'extrémité de fixation (13) de la poignée (12) possède un dispositif de blocage (24) configuré, après coulissement de la partie coulisseau de la poignée (12) le long de la glissière de guidage en translation (8 ; 8') de l'interface de fixation de poignée (7) de la bouteille (16 ; 16'), pour bloquer la position de l'extrémité de fixation (13) de la poignée (12) sur l'interface de fixation de poignée (7) de la bouteille (16 ; 16').

13. Ensemble bouteille-poignée selon la revendication 12, **caractérisé par le fait que** le dispositif de blocage (24) comprend un crochet d'emboîtement (25) élastiquement déformable qui est disposé sur l'une parmi l'extrémité de fixation (13) de la poignée (12) et l'interface de fixation de poignée (7) de la bouteille (16 ; 16') et qui est configuré, après coulissement de la partie coulisseau de la poignée (12) le long de la glissière de guidage en translation (8 ; 8') de l'interface de fixation de poignée (7) de la bouteille (16 ; 16'), pour s'emboîter élastiquement sur l'autre parmi l'interface de fixation de poignée (7) de la bouteille (16 ; 16') et l'extrémité de fixation (13) de la poignée (12).

14. Ensemble bouteille-poignée selon la revendication 12, **caractérisé par le fait que** le dispositif de blocage (24) comprend un plot (27) élastiquement déformable qui est disposé sur l'une parmi l'extrémité de fixation (13) de la poignée (12) et l'interface de fixation de poignée (7) de la bouteille (16 ; 16') et qui est configuré, après coulissement de la partie coulisseau de la poignée (12) le long de la glissière de guidage en translation (8 ; 8') de l'interface de fixation de poignée (7) de la bouteille (16 ; 16'), pour s'emboîter élastiquement dans un évidement (26) ménagé sur l'autre parmi l'interface de fixation de poignée (7) de la bouteille (16 ; 16') et l'extrémité de fixation (13) de la poignée (12).

15. Ensemble bouteille-poignée selon l'une des revendications 11 à 14, **caractérisé par le fait que** chacune de la bouteille (16 ; 16') et de la poignée (12) est en une matière thermoplastique parmi du poly(téréphtalate d'éthylène), PET, du polypropylène, PP, du polycarbonate, PC, de l'acide polylactique, PLA, du poly(naphtalate d'éthylène), PEN, du polystyrène, PS, du polyéthersulfone, PES, du polyphénylsulfone, PPSU, et du PET recyclé, rPET.

## Patentansprüche

1. - Vorformling (1; 1'), der zum Blasformen zu einer Flasche (16; 16') aus thermoplastischem Material bestimmt ist, wobei der Vorformling (1; 1') einen zylindrischen Körper (2) umfasst, der einen Schaft (3), einen Hals (4) und einen zwischen dem Schaft (3) und dem Hals (4) ausgebildeten Übergangsbereich (5) aufweist, wobei der Vorformling (1; 1') ferner eine Griffbefestigungsschnittstelle (7) umfasst, die einstückig an mindestens einem von dem Hals (4) und dem Übergangsbereich (5) des Vorformlings (1; 1') ausgebildet ist, **dadurch gekennzeichnet, dass** die Griffbefestigungsschnittstelle (7) eine Translationsführungsschiene (8; 8') umfasst, die an der Außenfläche des Vorformlings (1; 1') ausgebildet und geeignet ist, die Befestigung eines Griffs (12) durch Aufschieben zu ermöglichen, wobei die Translationsführungsschiene (8; 8') mit einem von dem Folgenden versehen ist:
- einer Translationsführungsrippe mit einem Querschnitt, der eine Basis (8a) aufweist, von der sich zwei Vorsprünge (8b) einander gegenüberliegend erstrecken; und
- einer Translationsführungsnut mit einem Querschnitt, der eine Basis aufweist, von der sich zwei Vorsprünge einander gegenüberliegend erstrecken.

2. - Vorformling (1; 1') nach Anspruch 1,
**dadurch gekennzeichnet, dass** die Translationsführungsschiene (8; 8') eine der folgenden ist:
- geradlinig und tangential zu dem äußeren Umfang des Vorformlings (1);
- gebogen und an einem Teil des äußeren Umfangs des Vorformlings (1) ausgebildet; und
- geradlinig und in Längsrichtung des Vorformlings (1') ausgebildet.

3. - Vorformling (1; 1') nach Anspruch 1 oder 2, **dadurch gekennzeichnet, dass** die Translationsführungsrippe einen T-förmigen Querschnitt aufweist.

4. - Vorformling (1; 1') nach Anspruch 1 oder 2, **dadurch gekennzeichnet, dass** die Translationsführungsnut einen T-förmigen Querschnitt aufweist.

5. - Vorformling (1) nach einem der Ansprüche 1 bis 3, **dadurch gekennzeichnet, dass** die Translationsführungsrippe eine der folgenden ist:
- geradlinig und tangential zu dem äußeren Umfang des Vorformlings (1); und
- gebogen und an einem Teil des äußeren Umfangs des Vorformlings (1) ausgebildet;
und die Griffbefestigungsschnittstelle (7) ferner mindestens eins von einem oberen Absatz (9), der oberhalb der Translationsführungsrippe ausgebildet ist, und einem unteren Absatz (10), der unterhalb der Translationsführungsrippe ausgebildet ist, umfasst.

6. - Vorformling (1) nach Anspruch 5, **dadurch gekennzeichnet, dass** ein unterer Absatz (10) unterhalb der Translationsführungsrippe ausgebildet ist und dass eine Nut (11) in dem unteren Absatz (10) der Griffbefestigungsschnittstelle (7) entlang der Länge der Translationsführungsrippe ausgebildet ist.

7. - Vorformling (1') nach einem der Ansprüche 1 bis 4, **dadurch gekennzeichnet, dass** die Translationsführungsrippe oder -nut geradlinig und in Längsrichtung des Vorformlings (1') ausgebildet ist, und die Griffbefestigungsschnittstelle (7) wahlweise ferner eins umfasst von:
- einem unteren Anschlag, der an dem unteren Ende der Translationsführungsrippe oder -nut ausgebildet ist; und
- einem oberen Anschlag (21), der an dem oberen Ende der Translationsführungsrippe oder -nut ausgebildet ist.

8. - Flasche (16; 16') aus thermoplastischem Material, hergestellt durch Blasformen eines Vorformlings (1; 1') nach einem der Ansprüche 1 bis 7, **dadurch gekennzeichnet, dass** die Flasche (16; 16') nach dem Blasformen des Vorformlings (1; 1'), die Griffbefestigungsschnittstelle (7) beibehält, die einstückig an einem nach dem Blasformen unverformten Bereich von mindestens einem von dem Hals (4) und der Schulter (19) der Flasche (16; 16') ausgebildet ist, wobei die Translationsführungsschiene (8; 8') der Griffbefestigungsschnittstelle (7) geeignet ist, die Befestigung eines Griffs (12) durch Aufschieben auf die Flasche (16; 16') zu ermöglichen.

9. - Flasche (16; 16') nach Anspruch 8, **dadurch gekennzeichnet, dass** der Teil der Schulter (19) der Flasche (16; 16'), der sich unterhalb der Griffbefestigungsschnittstelle (7) befindet, eine Vertiefung (20) aufweist, die geeignet ist, die Anordnung eines Griffs (12) darüber zu ermöglichen.

10. - Flasche (16; 16') nach Anspruch 8 oder 9, **dadurch gekennzeichnet, dass** die Flasche (16; 16') vom Typ Kanister mit einem Volumen zwischen 3 und 25 Litern ist.

11. - Flasche-Griff-Anordnung, **dadurch gekennzeichnet, dass** sie eine Flasche (16; 16') nach einem der Ansprüche 8 bis 10 und einen angesetzten Griff (12) umfasst, von dem ein Befestigungsende (13) einen zu der Translationsführungsschiene (8; 8') der Griffbefestigungsschnittstelle (7) der Flasche (16; 16') komplementären Schlittenabschnitt umfasst, wobei das Befestigungsende (13) des Griffs (12) durch Aufschieben des Schlittenabschnitts des Griffs (12) entlang der Translationsführungsschiene (8; 8') der Griffbefestigungsschnittstelle (7) der Flasche (16; 16') an der Griffbefestigungsschnittstelle (7) der Flasche (16; 16') befestigt ist.

12. - Flasche-Griff-Anordnung nach Anspruch 11, **dadurch gekennzeichnet, dass** mindestens eins von der Griffbefestigungsschnittstelle (7) der Flasche (16; 16') und dem Befestigungsende (13) des Griffs (12) eine Verriegelungsvorrichtung (24) aufweist, die nach dem Aufschieben des Schlittenabschnitts des Griffs (12) entlang der Translationsführungsschiene (8; 8') der Griffbefestigungsschnittstelle (7) der Flasche (16; 16') dazu konfiguriert ist, die Position des Befestigungsendes (13) des Griffs (12) an der Griffbefestigungsschnittstelle (7) der Flasche (16; 16') zu verriegeln.

13. - Flasche-Griff-Anordnung nach Anspruch 12, **dadurch gekennzeichnet, dass** die Verriegelungsvorrichtung (24) einen elastisch verformbaren Einrasthaken (25) umfasst, der entweder an dem Befestigungsende (13) des Griffs (12) oder an der Griffbefestigungsschnittstelle (7) der Flasche (16; 16') angeordnet ist und der dazu konfiguriert ist, nach dem Verschieben des Schlittenabschnitts des Griffs (12) entlang der Translationsführungsschiene (8; 8') der Griffbefestigungsschnittstelle (7) der Flasche (16; 16') elastisch entweder an dem jeweils anderen von der Griffbefestigungsschnittstelle (7) der Flasche (16; 16') oder an dem Befestigungsende (13) des Griffs (12) einzurasten.

14. - Flasche-Griff-Anordnung nach Anspruch 12, **dadurch gekennzeichnet, dass** die Verriegelungsvorrichtung (24) einen elastisch verformbaren Zapfen (27) umfasst, der entweder an dem Befestigungsende (13) des Griffs (12) oder an der Griffbefestigungsschnittstelle (7) der Flasche (16; 16') angeordnet ist und der dazu konfiguriert ist, nach dem Verschieben des Schlittenabschnitts des Griffs (12) entlang der Translationsführungsschiene (8; 8') der Griffbefestigungsschnittstelle (7) der Flasche (16; 16') elastisch in eine Ausnehmung (26) einzurasten, die entweder an dem jeweils anderen von der Griffbefestigungsschnittstelle (7) der Flasche (16; 16') oder an dem Befestigungsende (13) des Griffs (12) vorgesehen ist.

15. - Flasche-Griff-Anordnung nach einem der Ansprüche 11 bis 14, **dadurch gekennzeichnet, dass** sowohl die Flasche (16; 16') als auch der Griff (12) aus einem thermoplastischen Material, ausgewählt aus Poly(ethylenterephthalat), PET, Polypropylen, PP, Polycarbonat, PC, Polymilchsäure, PLA, Poly(ethylennaphthalat), PEN, Polystyrol, PS, Polyethersulfon, PES, Polyphenylen-sulfon, PPSU, und recyceltem PET, rPET, bestehen.

## Claims

1. - A preform (1 ; 1') intended to be blowed into a bottle (16 ; 16') made of thermoplastic material, said preform (1 ; 1') comprising a cylindrical body (2) having a barrel (3), a neck (4), and a transition area (5) formed between the barrel (3) and the neck (4), the preform (1 ; 1') further comprising a handle attachment interface (7) integrally formed on at least one of the neck (4) and the transition area (5) of the preform (1 ; 1'), **characterized in that** said handle attachment interface (7) comprises a translational guide rail (8 ; 8') formed on the outer surface of the preform (1 ; 1') and capable of allowing a handle (12) to be slidably attached, said translational guide rail (8 ; 8') being provided with one of :
- a translational guide rib having a cross-section with a base (8a) from which two projections (8b) extend in opposite directions ; and
- a translational guide groove having a cross-section with a base from which two projections extend in opposite directions.

2. - The preform (1 ; 1') according to claim 1, **characterized in that** the translational guide rail (8 ; 8') is one of :
- straight and tangent to the outer circumference of the preform (1) ;
- curved and formed on a portion of the outer circumference of the preform (1) ; and
- straight and formed along the longitudinal direction of the preform (1').

3. - The preform (1 ; 1') according to claim 1 or 2, **characterized in that** said translational guide rib has a T-shaped cross-section.

4. - The preform (1 ; 1') according to claim 1 or 2, **characterized in that** said translational guide groove has a T-shaped cross-section.

5. - The preform (1) according to one of claims 1 to 3, **characterized in that** the translational guide rib is one of :
- straight and tangent to the outer circumference of the preform (1) ; and
- curved and formed on a portion of the outer circumference of the preform (1) ;
and the handle attachment interface (7) further comprises at least one of an upper shoulder (9) formed above the translational guide rib and a lower shoulder (10) formed below the translational guide rib.

6. - The preform (1) according to claim 5, **characterized in that** a lower shoulder (10) is formed below the translational guide rib and a groove (11) is provided in the lower shoulder (10) of the handle attachment interface (7) along the length of the translational guide rib.

7. - The preform (1') according to one of claims 1 to 4, **characterized in that** the translational guide rib or groove is straight and formed along the longitudinal direction of the preform (1'), and optionally the handle attachment interface (7) further comprises one of :
- a lower stop formed at the lower end of the translational guide rib or groove ; and
- an upper stop (21) formed at the upper end of the translational guide rib or groove.

8. - A bottle (16 ; 16') made of thermoplastic material, manufactured by blow molding of a preform (1 ; 1') according to one of claims 1 to 7, **characterized in that** said bottle (16 ; 16') keeps, after blow molding of the preform (1 ; 1'), the handle attachment interface (7) which is integrally formed on an area that remains undeformed after blowing of at least one of the neck (4) and the shoulder (19) of the bottle (16 ; 16'), the translational guide rail (8 ; 8') of the handle attachment interface (7) being adapted to allow a handle (12) to be slidably attached to the bottle (16 ; 16').

9. - The bottle (16 ; 16') according to claim 8, **characterized in that** the portion of the shoulder (19) of the bottle (16 ; 16') located below the handle attachment interface (7) has a recess (20) adapted to allow a handle (12) to be positioned above it.

10. - The bottle (16 ; 16') according to claim 8 or 9, **characterized in that** the bottle (16 ; 16') is a carboy-type bottle with a volume between 3 and 25 Liters.

11. - A bottle-handle assembly, **characterized in that** it comprises a bottle (16 ; 16') according to one of claims 8 to 10 and an attached handle (12), one attachment end (13) of which comprises a slide member complementary to the translational guide rail (8 ; 8') of the handle attachment interface (7) of the bottle (16 ; 16'), said attachment end (13) of the handle (12) being attached to the handle attachment interface (7) of the bottle (16 ; 16') by sliding the slide member of the handle (12) along the translational guide rail (8 ; 8') of the handle attachment interface (7) of the bottle (16 ; 16').

12. - The bottle-handle assembly according to claim 11, **characterized in that** at least one of the handle attachment interface (7) of the bottle (16 ; 16') and the attachment end (13) of the handle (12) has a locking device (24) configured, after the slide member of the handle (12) has slid along the translational guide rail (8 ; 8') of the handle attachment interface (7) of the bottle (16 ; 16'), to lock the position of the attachment end (13) of the handle (12) on the handle attachment interface (7) of the bottle (16 ; 16').

13. - The bottle-handle assembly according to claim 12, **characterized in that** the locking device (24) comprises an elastically deformable snap hook (25) which is disposed on one of the attachment end (13) of the handle (12) and the handle attachment interface (7) of the bottle (16 ; 16') and which is configured, after the slide member of the handle (12) has slid along the translational guide rail (8 ; 8') of the handle attachment interface (7) of the bottle (16 ; 16'), to snap fit with the other of the handle attachment interface (7) of the bottle (16 ; 16') and the attachment end (13) of the handle (12).

14. - The bottle-handle assembly according to claim 12, **characterized in that** the locking device (24) comprises an elastically deformable stud (27) which is disposed on one of the attachment end (13) of the handle (12) and the handle attachment interface (7) of the bottle (16 ; 16') and which is configured, after the slide member of the handle (12) has slid along the translational guide rail (8 ; 8') of the handle attachment interface (7) of the bottle (16 ; 16'), to snap fit into a recess (26) formed on the other of the handle attachment interface (7) of the bottle (16 ; 16') and the attachment end (13) of the handle (12).

15. - The bottle-handle assembly according to one of claims 11 to 14, **characterized in that** each of the bottle (16 ; 16') and the handle (12) is made of a thermoplastic material selected from polyethylene terephthalate, PET, polypropylene, PP, polycarbonate, PC, polylactic acid, PLA, polyethylene naphthalate, PEN, polystyrene, PS, polyethersulfone, PES, polyphenylsulfone, PPSU, and recycled PET, rPET.
